# FASCICULE DE BREVET EUROPEEN

(11) **EP 0 619 016 B1**
(45) Date de publication et mention de la délivrance du brevet: **08.04.1998**
(21) Numéro de dépôt: 93924117.0
(22) Date de dépôt: 27.10.1993
(51) Int. Cl.: G01N 21/45

(54) **PROCEDE ET DISPOSITIF DE MESURE DIFFERENTIELLE D'INDICES DE REFRACTION ET UTILISATION ASSOCIEE**
VERFAHREN UND VORRICHTUNG ZUR DIFFERENTIELLEN MESSUNG VON BRECHUNGSINDIZES UND DEREN ANWENDUNG
PROCESS AND DEVICE FOR THE DIFFERENTIAL MEASUREMENT OF REFRACTION INDEXES AND USE THEREOF

(30) Priorité: 28.10.1992 FR 9212946
(43) Date de publication de la demande: 12.10.1994
(73) Titulaire: INSTITUT FRANCAIS DU PETROLE, 92502 Rueil-Malmaison (FR); Couillard, François, 91330 Yerres (FR)
(72) Inventeur: FROT, Didier, F-94600 Choisy-le-Roi (FR); BEAUDUCEL, Claude, F-60119 Hénonville (FR); GONZALEZ, Pierre, F-92500 Rueil-Malmaison (FR); COUILLARD, François, F-91330 Yerres (FR)
(74) Mandataire: Andreeff, François
(86) Numéro de dépôt international: FR9301054
(87) Numéro de publication internationale: WO9410552

(56) Documents cités:
- EP-A- 0 239 487
- DE-A- 2 518 197
- FR-A- 2 254 996
- GB-A- 2 117 132
- US-A- 4 289 403
- PATENT ABSTRACTS OF JAPAN vol. 6, no. 198 (P-147)(1076) 7 Octobre 1982 & JP-A-57 108 742 (NIHON BONKOU) 6 Juillet 1982

## Description

La présente invention a trait notamment, mais non exclusivement, au domaine de la chromatographie liquide à hautes performances, qui consiste à déterminer la composition d'un milieu liquide par le biais de son indice de réfraction.

L'invention concerne un procédé de mesure de la différence entre les indices de réfraction de deux milieux chacun traversé par un faisceau lumineux.

Plus précisément, l'invention a pour objet un réfractomètre différentiel à modulation de phase et à franges d'interférences glissantes.

L'utilisation de la présente invention permet d'envisager des perfectionnements aux chromatographes en phase liquide à hautes performances, dits "HPLC" (High Performance Liquid Chromatography).

A l'heure actuelle, la plupart des détecteurs utilisés dans ce domaine sont les photomètres et les réfractomètres, et, plus rarement, pour des applications très spécifiques, des détecteurs électrochimiques, conductimétriques ou autres.

Les photomètres présentent les avantages d'une haute sensibilité et d'une grande stabilité. Ils sont utilisables dans tous les cas où les éluats à détecter absorbent la lumière dans la gamme des longueurs d'onde comprises entre 190 et 700 ηm environ. Mais ces photomètres présentent des inconvénients majeurs : ils ne sont pas universels et dans une même analyse, on peut rencontrer des éluats qui absorbent la lumière à des longueurs d'onde différentes ou qui même ne l'absorbent pratiquement pas, ce qui notamment en chromatographie préparative peut présenter l'inconvénient de laisser passer inaperçues des impuretés.

Qui plus est, dans le cas de chromatographie préparative, le photomètre est rapidement saturé vers une densité optique de l'ordre de 2.

En divisant par exemple par 10 la longueur du chemin optique dans la cuve, on diminue cet inconvénient, mais en perdant plus encore sur la sensibilité.

Quant aux refractomètres, ils présentent l'avantage essentiel d'être pratiquement universels. La plupart des appareils actuellement commercialisés sont à déviation de faisceaux lumineux par double cuve prismatique à circulation. Dans ces détecteurs, une source lumineuse projette un faisceau sur un double photodétecteur après avoir traversé successivement un diaphragme, d'éventuelles lentilles de concentration, une lame de verre tournante à faces parallèles pour ajuster le zéro optique de l'appareil, c'est-à-dire pour équilibrer l'intensité lumineuse éclairant les deux photodétecteurs, une double cuve prismatique l'une pour le liquide de référence, l'autre pour la phase à analyser.

Lorsque l'indice de réfraction de cette dernière varie, la section prismatique des deux cuves successives est telle que le faisceau dévie d'un photodétecteur vers l'autre, selon le signe de la différence des indices entre les deux cuves. Or, dans certains cas, notamment en chromatographie préparative, où l'on peut rencontrer des concentrations élevées dans l'une des deux cuves, ou si l'on crée un gradient d'élution, les variations d'indices peuvent être telles que le faisceau peut dévier jusqu'à saturation de l'instrument, c'est-à-dire que le faisceau dévié n'éclaire plus qu'une seule des deux cellules. Ainsi, le chromatogramme se trouve écrêté et plusieurs pics à base commune peuvent se trouver non distingués.

Comme pour les photomètres, on peut réduire ces inconvénients en diminuant les déviations, mais ceci au prix, encore ici, d'une perte sur la sensibilité. On évite alors la saturation mais on ne distingue plus les petits pics, c'est-à-dire les impuretés, quand on est en chromatographie préparative.

Quels que soient les efforts déployés, on se heurte toujours aux problèmes que crée un gradient d'élution.

On a également proposé un système réfractométrique à source monochromatique dont le faisceau est divisé pour traverser deux cuves en parallèle l'une contenant un liquide de référence et l'autre la phase à analyser, puis les deux faisceaux sont rassemblés pour éclairer un photodétecteur. Des interférences se produisent du fait de la variation du chemin optique, en fonction de la variation de l'indice. On peut considérer que la sinusoïde suivie par l'intensité est linéaire au voisinage de la différence d'indice nulle ; ce qui donne une sensibilité acceptable mais ne résoud pas les problèmes de saturation et d'utilisation de gradient, et comme dans les cas précédents, la saturation sera évitée au détriment de la sensibilité.

Le brevet français FR2596526 illustre un exemple de détecteur réfractométrique dans lequel chacune des cuves (de référence et de mesure) participe de façon indépendante à un système d'interférométrie, les deux cuves étant alimentées en lumière par la même source.

La détection photométrique est, selon cet art antérieur, réalisée par deux photodétecteurs indépendants qui recoivent donc chacun une intensité lumineuse qui est une fonction sinusoïdale de la différence des indices de réfraction entre la cuve de référence ou l'air et la cuve de mesure. Une calibration individuelle de chacun des photomètres est donc nécessaire.

Ce système optique comporte notamment un élément piézo-électrique destiné à faire vibrer un miroir sur lequel se réfléchit une partie du faisceau lumineux issu de la source. Or, l'élément piézo-électrique peut créer une certaine dérive (liée à l'échauffement) de la mesure dans le temps. En outre, la mise en mouvement du miroir par la pièce piézo-électrique est nécessairement limitée en fréquence et/ou en amplitude, ce qui n'autorise pas une large plage de mesures ni une grande précision dans la mesure.

Par ailleurs, il est connu des brevets français 2 254 996, de la demande de brevet DT 25 18 197 ou encore du brevet US 4 289 403 qu'une mesure de chemin optique peut être extraite simplement lors de la mesure du déphasage enregistré entre le signal délivré par un photodétecteur situé dans une figure d'interférence et la modulation appliquée à un seul des faisceaux de l'interféromètre. Cette mesure du chemin optique donnera pour une distance échantillon donnée la différence d'indice de réfraction pour une référence stable ou bien encore lorsque l'indice est connu et reste constant, on pourra déterminer par la même mesure la distance échantillon.

Ces différents enseignements s'accordent à dire que le dispositif interférométrique doit être stable, aussi compacte que possible, et symétrique du point de vue des chemins empruntés par chacun des faisceaux.

Le brevet US 4 289 403 illustre bien cette constatation puisque l'objet de cette invention est un modulateur d'un genre nouveau qui minimise la différence de chemin optique pour chacun des deux faisceaux le traversant, même si en contre-partie la modulation résultante présente quelques non linéarités.

Dans le document Allemand 2 518 197 c'est une compensation appliquée au modulateur qui permet d'obtenir l'amplitude du déphasage. Ce système permet une réponse rapide dans l'analyse des déphasages engendrés par les variations d'une grandeur physique. Il ressort clairement de ce document qu'une compensation, en terme de haute tension pour une cellule de Pockels par exemple, appliquée au modulateur n'est plus linéaire au delà d'un déphasage de l'ordre de 2x180° (approximativement 4λ) et qu'une compensation supérieure à cette valeur endommagerait le modulateur. Ceci limite donc la dynamique de l'outil.

De façon avantageuse, la présente invention propose un outil de grande dynamique capable de répondre aux besoins des chromatographistes ; ceci est notamment vrai dans le mode gradiant l'élution où la différence d'indice de réfraction exprimée en longueur d'onde est le plus souvent de l'ordre de quelques dizaines de fois λ.

En outre, dans tous les cas précités il est nécessaire d'utiliser deux photodétecteurs qui doivent alors être parfaitement identiques, ce qui nécessite une calibration individuelle et interdit la mesure sur des systèmes absorbants à la longueur d'onde utilisée.

La présente invention a pour but d'éviter notamment les inconvénients précités en proposant un système de conception simple qui, de plus, ne comporte qu'un seul photodétecteur.

La présente invention permet notamment de rendre compatibles sensibilité et saturation, surtout pour la chromatographie préparative et permet en outre d'utiliser un gradient d'élution aussi bien en chromatographie analytique qu'en chromatographie préparative.

Pour ce faire, conformément à l'invention, on fait appel à un réfractomètre différentiel interférentiel dont chacune des cuves (de référence et de mesure) participera indépendamment l'une de l'autre à un seul interferogramme alimenté en lumière par une même source (laser par exemple).

Par ailleurs, l'invention, en utilisant un modulateur bien connu de l'homme de métier telle une cellule de Pockels, disposé convenablement dans l'agencement des pièces constitutives de l'interféromètre permet aux deux faisceaux d'emprunter exactement (au sens de la maille cristaline) le même chemin optique. Cette caractéristique est liée au fait que le modulateur selon l'invention est disposé, de façon particulière, sur le faisceau initial, avant la séparation en deux faisceaux.

De plus, en utilisant un modulateur bien connu, on évitera les problèmes de non linéarité liés à l'utilisation d'un modulateur d'une nouvelle conception comme celui divulgué par exemple dans le brevet US 4 289 403.

En outre, le réfractomètre selon l'invention ne présente quasiment pas de dérive de la mesure, mais au contraire, une grande stabilité des interférences produites. Avantageusement, la précision de la mesure est améliorée puisqu'aucune limite mécanique n'est imposée, aucune pièce n'étant mise en mouvement.

Enfin, la plage de mesure est très grande voire illimitée de part la nature et la combinaison même des éléments réalisant l'invention.

Pour ce faire, dans le réfractomètre différentiel interférentiel selon l'invention, chacune des cuves participe au même système interférométrique. La détection photométrique sera préférentiellement réalisée par un seul détecteur placé dans l'unique figure d'interférence produite par l'interféromètre.

Dans la suite du texte le terme "figure d'interférence" décrit le cas où deux faisceaux combinés en un même point de l'espace donnent naissance à un profil d'éclairement de contraste sinusoïdal, tout comme le cas où deux faisceaux réunis en un seul et unique faisceau donnent un système d"'interférences à teintes plates". Dans tous les cas l'analyse du déplacement des franges d'interférences (profil d'éclairement sinusoïdal) ou de l'état de polarisation du faisceau résultant de la combinaison des deux faisceaux (interférences à teintes plates) donne un signal équivalent du point de vue de la différence d'indice de réfraction rencontré par chacun des faisceaux traversant respectivement chacune des cuves.

En outre le traitement optique de la branche de référence étant modulé à une fréquence de modulation FM, le photodétecteur associé reçoit ainsi une intensité lumineuse qui est une fonction sinusoïdale de fréquence FM dont la phase est proportionnelle à sa position spatiale. L'intensité lumineuse dépend donc aussi de la différence des indices de réfraction entre les cuves de référence et de mesure.

Plus précisément, dans un tel système, le photodétecteur restant fixe, il reçoit une intensité lumineuse de variation sinusoïdale en fonction du temps, de fréquence égale à FM et dont la variation de phase est fonction de la variation de la différence des indices entre cuve de référence et cuve de mesure. Ainsi, si l'on dispose d'une mesure de phase entre le signal issu du photodétecteur et une référence fixe, on peut mesurer la différence d'indice de réfraction entre les deux cuves, l'indice de réfraction pouvant varier progressivement même dans des proportions très grandes, par exemple en gradient

La présente invention permet ainsi de résoudre à la fois le problème de la dynamique de mesure et celui de la sensibilité maximum qui est recherchée notamment en chromatographie liquide à hautes performances.

L'invention concerne un procédé de mesure de la différence entre des indices de réfraction de deux milieux, chacun traversé par un faisceau lumineux, lesdits faisceaux étant susceptibles de donner naissance à une "figure d'interférence" dont on mesure le déplacement.

Conformément à l'invention, on modifie l'une des composantes de polarisation du faisceau F, on réalise une modulation de phase sur l'une au moins desdites composantes de polarisation du faisceau F afin d'obtenir un glissement des franges de la figure d'interférence, ce qui permet de quantifier la différence relative des indices de réfraction des deux milieux (Cr, Cm).

Selon l'invention, on utilise un unique moyen pour détecter le déplacement des franges de la "figure d'interférence" ; ledit moyen étant notamment destiné à détecter l'amplitude et le sens de déplacement des franges de la figure d'interférence.

Une cellule de Pockels peut être utilisée pour moduler la phase.

L'invention a en outre pour objet un réfractomètre différentiel utilisable notamment en chromatographie liquide à hautes performances, qui peut comprendre :
- une source de lumière cohérente émettant un faisceau F,
- un diviseur optique destiné notamment à diviser la polarisation dudit faisceau F issu de ladite source,
- un premier élément optique destiné notamment à rendre parallèles les deux faisceaux cohérents issus du diviseur optique,
- deux cuves Cr, Cm, l'une Cr destinée à contenir un liquide de référence, l'autre Cm un liquide à mesurer, chacune traversée par l'un des deux faisceaux issus du premier système optique,
- un ensemble optique combinant chacun des deux faisceaux I et II issus desdites cuves, et permettant de créer une figure d'interférences, et
- un photodétecteur associé à ladite figure d'interférences.

Selon l'invention le réfractomètre comporte en outre un premier milieu optique biréfringent placé sur le faisceau F de la source, en amont du diviseur optique et destiné à modifier l'une des composantes de la polarisation dudit faisceau F,
- un deuxième milieu optique biréfringent placé en amont de ladite figure d'interférence, préférentiellement sur l'un des faisceaux issu du diviseur;
- un système électronique (11-18) destiné à moduler la phase de l'une des composantes de polarisation appliquée au milieu optique biréfringent 2, ledit système électronique permettant en outre l'analyse de la phase instantanée relative entre le signal de modulation R appliqué audit milieu biréfringent 2 et le signal S mesuré aux bornes dudit photodétecteur 9, ce qui permet de quantifier la différence relative des indices de réfraction de la cuve de référence Cr et de la cuve de mesure Cm, et
- un système informatique destiné à traiter les données issues du système électronique.

Préférentiellement, le premier milieu biréfringent peut être une cellule de Pockels.

Selon un mode de réalisation de l'invention l'ensemble optique combinant chacun des faisceaux I et II issus desdites cuves comprend une lentille destinée à créer en son foyer ladite figure d'interférence.

Avantageusement, le photodétecteur peut être constitué d'une fibre optique dont une extrêmité est placée au foyer de la lentille convergente, la surface d'extrêmité de la fibre qui reçoit l'intensité lumineuse étant perpendiculaire à l'axe optique du réfractomètre, l'autre extrêmité de la fibre optique étant reliée à un photodétecteur.

Selon un autre mode de réalisation de l'invention, l'ensemble optique combinant chacun des faisceaux I et II comprend le deuxième milieu optique biréfringent polariseur et une lame destinée à dévier le faisceau.

Cet ensemble optique peut en outre comprendre un élément réfléchissant destiné à renvoyer chacun des deux faisceaux I et II à travers l'une desdites cuves (Cr, Cm) puis vers le premier élément optique, le diviseur optique, ladite lame et le deuxième milieu optique biréfringent.

D'autres détails, particularités et avantages de l'invention seront mieux compris à la lecture de la description qui va suivre, faite à titre illustratif et nullement limitatif, en référence aux dessins annexés sur lesquels :
- la figure 1 est un schéma montrant les composants essentiels de l'invention et leur agencement mutuel selon un premier mode de réalisation de l'invention;
- la figure 2 est un schéma montrant les composants essentiels de l'invention et leur agencement mutuel selon un autre mode de réalisation de l'invention;
- la figure 3 est un schéma simplifié de la partie électronique de l'invention ; et
- la figure 4 représente un algorithme de traitement.

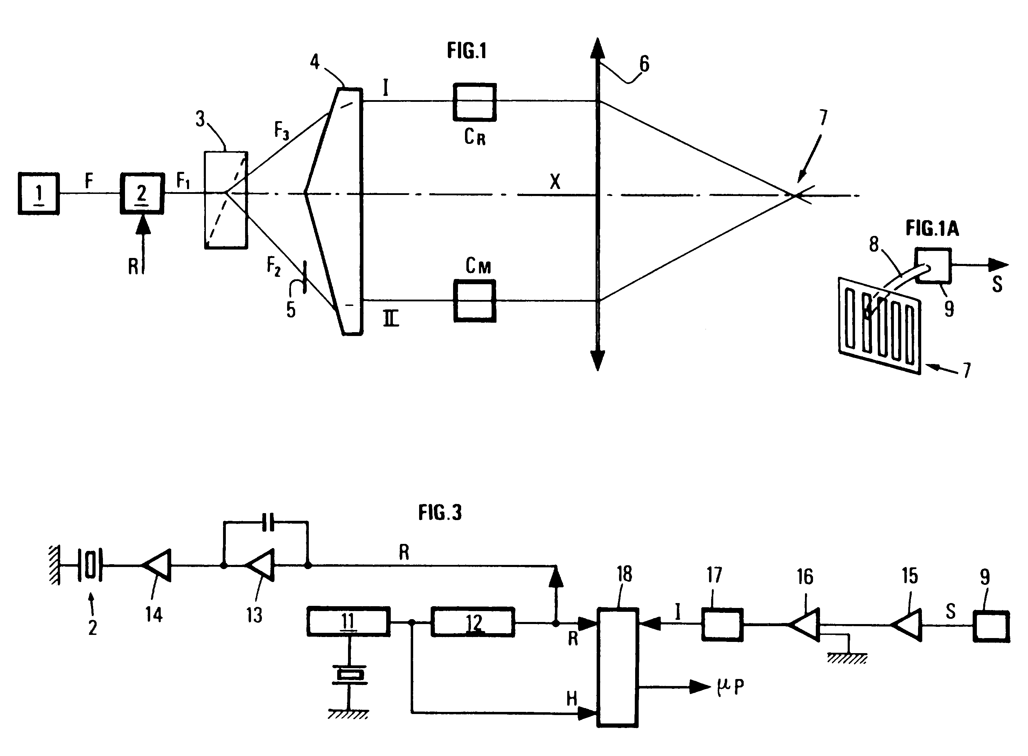

Sur la figure 1 apparaissent de façon schématique les principaux constituants de l'invention : Une source 1 de lumière cohérente, monochromatique de préférence (de type LASER) émet un faisceau "F" polarisé, constitué de 2 composantes orthogonales.

Selon l'invention, une cellule de Pockels 2 ou tout autre milieu optique biréfringent connu en soi, est placée sur le trajet du faisceau "F" en lui imposant un retard ou une avance de phase ce qui crée en sortie de cellule, un faisceau "F1" dont l'une des composantes de polarisation est modifiée.

Par ailleurs, comme il sera expliqué plus loin, la cellule de Pockels 2 reçoit un signal de modulation R en provenance d'un système électronique. L'utilisation, comme modulateur, d'une cellule de Pockels dont la réponse électrique est strictement capacitive, vis-à-vis d'une cale piézoélectrique par exemple, assure une plus grande stabilité des interférences produites donc beaucoup moins de dérive durant la mesure.

Le faisceau "F1" entre dans un diviseur optique 3, tel un prisme de Wollaston par exemple, destiné à le diviser en au moins deux faisceaux "F2" et "F3" qui sont envoyés dans un premier système optique 4. L'un des faisceaux est modulé en phase, l'autre non. Le premier élément optique 4 peut être par exemple un biprisme ou une lentille convergente destiné à rendre parallèles, spatialement espacés, les deux faisceaux "F1" et "F2" qui, en sortie du diviseur 3 n'étaient pas parallèles.

De façon préférentielle, un deuxième milieu optique biréfringent 5 (ou lame-retard) est placé sur l'un des faisceaux "F2" ou "F3" afin de changer la polarisation du faisceau optique (F2 par exemple) sur lequel il est placé, de sorte que les faisceaux "F2" et "F3" puissent entrer dans le premier élément optique (biprisme) 4 avec une même polarisation.

Ainsi, en sortie de biprisme 4, chacun des deux faisceaux parallèles I et II, de même état de polarisation, spatialement espacés, traverse une cuve : l'une Cm contenant la composition à mesurer. l'autre cuve Cr contenant une composition de référence. Les deux cuves peuvent en fait être contenues dans un même bloc (ou élément).

Après avoir traversé chacun une cuve, les faisceaux I et II sont repris par une lentille convergente 6 destinée à ramener l'image des deux faisceaux en son foyer 7. C'est donc en cet endroit que seront créées les interférences ou la "figure" d'interférences.

Un contraste optimal des franges formant la figure d'interférence peut être réalisé en faisant tourner autour de son axe X le faisceau issu de la source de lumière 1.

Au foyer 7 est placé un détecteur d'interférences qui peut être constitué d'une fibre optique 8 (de rayon Rf) dont une extrémité est positionnée au foyer de la lentille convergente 6 de telle sorte que le rayon Rf reste inférieur ou égal à la distance séparant deux franges d'interférence de même nature. Autrement dit, le rayon Rf est du même ordre de grandeur que l'interfrange.

La section droite de la fibre optique 8 est préférentiellement perpendiculaire à l'axe longitudinal X du réfractomètre. Cet axe est généralement confondu avec l'axe de la source lumineuse 1. L'autre extrémité de la fibre optique 8 peut être couplée à un photo détecteur linéaire 9, connu en soi, fonctionnant dans une plage d'intensité prédéterminée.

Sans sortir du cadre de l'invention, une pastille percée placée dans la région 7 où convergent les faisceaux, peut directement être couplée mécaniquement au même photodétecteur.

Comme il va être expliqué plus en détail ci-après, l'analyse de la phase instantanée relative entre le signal de modulation appliqué à la cellule de Pockels 2 et le signal mesuré aux bornes du photodétecteur 9 va permettre de quantifier la différence relative d'indice de réfraction entre la cuve de référence et la cuve de mesure.

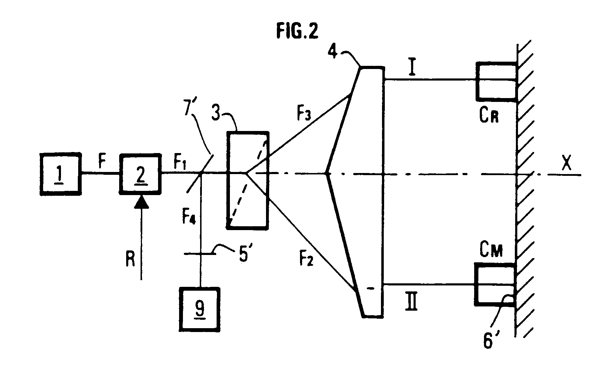

Auparavent va être décrit un autre mode de réalisation de l'invention, en relation avec la figure 2.

Ce mode de réalisation est équivalent au premier en ce qui concerne les fonctions et les objectifs à atteindre. Cependant il présente notamment un coût inférieur et une meilleure sensibilité.

Seules les différences vis à vis du mode de réalisation décrit ci-dessus vont maintenant être énoncées :

Après son passage dans le modulateur 2, le faisceau F1 rencontre une lame semi-transparente 7', faisant préférentiellement un angle de 45° avec l'axe principal X, puis le faisceau "F1" entre un diviseur optique 3, tel un prisme de Wollaston par exemple, destiné à le diviser en au moins deux faisceaux "F2" et "F3" qui sont envoyés dans un premier système optique 4. L'un des faisceaux est modulé en phase, l'autre non.

Comme déjà énoncé, le premier élément optique 4 peut être par exemple un biprisme ou une lentille convergente destiné à rendre parallèles, spatialement espacés, les deux faisceaux "F1" et "F2" qui, en sortie du diviseur 3 n'étaient pas parallèle.

Ainsi, en sortie du biprisme 4, chacun des deux faisceaux parallèles I et II, spatialement espacés, traverse une cuve : l'une Cm contenant la composition à mesurer, l'autre cuve Cr contenant une composition de référence.

Selon ce mode de réalisation de l'invention après avoir traversé chacun une cuve, les faisceaux I et II sont réfléchis par une couche métallique 6' déposée sur la face arrière de chacune des cellules Cm, Cr puis ils sont à nouveaus repris par le biprisme 4 et se recomposent dans le diviseur 3 en un faisceau unique F4 renvoyé à 90° de l'axe principal X grâce à la lame 7'.

Le faisceau F4 traverse un polariseur 5' qui permet d'analyser l'état de polarisation après recombinaison dans le diviseur 3. Puis le faisceau F4 est envoyé vers un photorécepteur 9.

Le photorécepteur 9 reçoit une intensité lumineuse proportionnelle à la projection de l'amplitude du vecteur champ électrique sur l'axe "transparent" du polariseur 17.

Vis à vis du premier mode de réalisation de l'invention,
- cet autre mode de réalisation (interféromètre replié) permet l'économie d'une lame demie-onde, d'une lentille convergente, d'un système de fibre optique ou de fente avant le photorécepteur.
- par ailleurs nous ramenons à un seul ordre d'interférence l'interférogramme correspondant au montage précédent, si bien que l'amplitude de l'intensité aux bornes du photodétecteur 9 est très largement augmentée.
- du fait du double passage (aller et retour) dans chacune des cellules Cm et Cr le système, à même volume de cuve, devient deux fois plus sensible.
- d'une façon très générale, parce que plus compact (interféromètre replié) il est plus stable vis à vis des vibrations, dilatations etc...

Comme il va être maintenant expliqué plus en détail, l'analyse de la phase instantanée relative entre le signal de modulation R appliqué à la cellule de Pockels 2 et le signal mesuré aux bornes du photodétecteur 9 va permettre de quantifier la différence relative d'indice de réfraction entre la cuve de référence et la cuve de mesure.

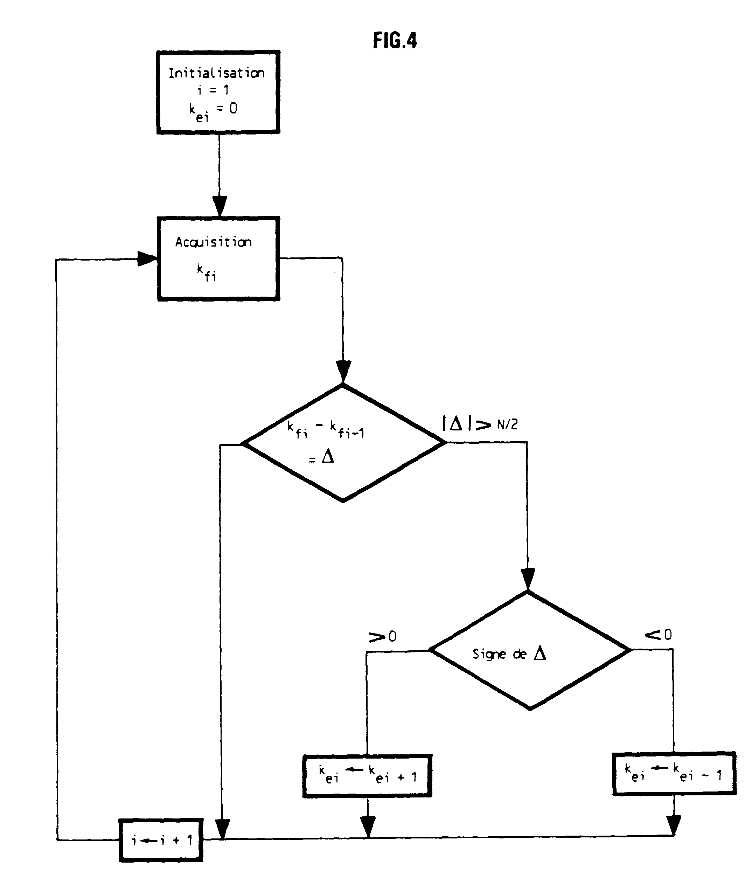

La figure 3 montre par un schéma simplifié le principe de la mesure de phase ; principe bien entendu valable pour tous les modes de réalisation de l'invention.

Un oscillateur à Quartz 11 fournit un signal H de fréquence égale à N fois Fₘ où N représente la résolution de la mesure de phase. Le signal H est divisé au moyen d'un diviseur 12 qui délivre donc un signal dit de référence R, de fréquence Fₘ. Ce signal est envoyé à la fois vers un compteur/décompteur 18 et vers la cellule de Pockels 2.

Avant d'être appliqué à la cellule de Pockels 2, le signal R est de préférence intégré dans un intégrateur 13 puis amplifié dans un amplificateur 14.

Par ailleurs, le signal S issu du photodétecteur 9 est de préférence amplifié dans un amplificateur 15, transformé en un signal carré de fréquence (2Fₘ) et comparé à un seuil dans un comparateur 16 ; puis le signal est divisé par 2 dans un diviseur 17 pour fournir finalement le signal carré I de mesure interférométrique.

Le front montant du signal I déclenche le début du comptage dans le compteur/décompteur 18 qui fonctionne à la fréquence N x Fₘ, tandis que le front montant du signal R appliqué à ce compteur 18 déclenche l'arrêt du comptage. Le compteur est ensuite remis à zéro jusqu'à l'arrivée d'un nouveau front montant du signal I.

Le compteur 18 (avant remise à zéro) contient donc (k_{fi}) un nombre compris entre 0 et N qui représente la phase instantanée relative entre le signal de référence R et le signal de mesure I issu du photodétecteur 9.

Ce nombre k_{fi} peut avantageusement être transféré vers un système de traitement de données (tout microprocesseur µP connu en soi peut être utilisé) qui calcule la phase instantanée absolue φi, tous les 1/Fₘ.

Un exemple d'algorithme de calcul est donné par la figure 3. La valeur calculée φi = kᵢ x 2π (en rd) ; kᵢ étant une valeur fractionnaire issue de la concaténation de deux valeurs de registres du microprocesseur k_{fi} et kₑᵢ.

La phase instantanée absolue φi peut encore être traitée moyenne, différence par rapport à un seuil, ... dans le microprocesseur.

Plusieurs sorties peuvent être prévues, telles que, par exemple, vers un micro-ordinateur via une liaison informatique connue en soi (type RS). Une sortie analogique peut aussi être prévue.

En outre, selon l'invention, des mesures dans deux configurations de polarisation des faisceaux I et II traversant les cuves pourront être successivement faites. Ainsi selon une première mesure le deuxième élément optique biréfringent 5 est placé sur le faisceau "F2" tandis que selon une deuxième mesure, l'élément 5 est placé sur le faisceau "F3". Ainsi une détection du caractère chiral des molécules présentes dans la cuve de mesure pourra être faite.

De façon préférentielle, l'invention est utilisée, comme indiqué en tête de la description, pour des mesures en chromatographie liquide à hautes performances, soit par exemple en adsorption ou en échange ionique.

De façon particulièrement avantageuse, le réfractomètre selon l'invention peut aussi être utilisé en aval d'une colonne de chromatographie par perméation sur gel, vu sa grande dynamique de mesure.

En outre, sans modification notable, le réfractomètre selon l'invention est adaptable à la mesure quantitative de l'indice de réfraction d'une solution en fonction de la concentration de soluté: mesure de calibration nécessaire à l'exploitation des résultats obtenus en diffusion statique de la lumière.

Bien entendu, diverses autres utilisations et/ou modifications du réfractomètre décrit ci-dessus pourront être réalisées par l'Homme de Métier sans sortir du cadre de la présente invention.

## Revendications

1. Procédé de mesure, à partir d'une source (1) de lumière cohérentc émettant un faisceau F, de la différence entre les indices de réfraction de deux milieux, (Cr, Cm) chacun traversé par un faisceau lumineux (I, II), lesdits faisceaux (I, II) étant susceptibles de donner naissance à une figure d'interférence dont on mesure le déplacement caractérisé en ce que l'on modifie l'une des composantes de polarisation du faisceau F. en ce que, avant de diviser ledit faisceau F, l'on réalise unc modulation de phase sur l'une au moins desdites composantes de polarisation du faisceau F afin d'obtenir un glissement des franges de la figure d'interférence, ce qui permet de quantifier la différence relative des indices de réfraction des deux milieux (Cr, Cm) et cn ce que l'on utilise un unique moyen (9) pour détecter le déplacement des franges de la figure (2) d'interférence.

2. Procédé selon la revendication 1, caractérisé en ce que l'on utilise une cellule de Pockets pour moduler ladite phase.

3. Procédé selon l'une quelconque des revendications 1 ou 2, caractérisé en ce que ledit moyen (9) est destiné à détecter l'amplitude et le sens de déplacement des franges de la figure d'interférence.

4. Réfractomètre différentiel utilisable notamment en chromatographie liquide à hautes performances, comprenant :
une source de lumière (1) cohérente émettant un faisceau F,
un diviseur optique (3) destiné à diviser la polarisation dudit faisceau F issu de ladite source.
un premier élément optique (4) destiné à rendre parallèles les deux faisceaux cohérents (F2. F3) issus du diviseur optique (3),
deux cuves Cr, Cm l'une Cr destinée à contenir un liquide de référence. l'autre Cm un liquide à mesurer, chacune traversée par l'un des faisccaux issus du premier système optique (4),
un ensemble optique combinant chacun des deux faisceaux I et II issus desdites cuves, et permettant de créer une figure d'interférences, et
un unique photodétecteur (9) associé à ladite figure d'interférences,
caractérisé en ce qu'il comporte en outre un premier milieu optique biréfringent (2) placé sur le faisceau F de la source (1), en amont du diviseur optique (3) et destiné à modifier l'une des composantes de la polarisation dudit faisceau F,
- un deuxième milieu optique biréfringent (5 ; 5') placé en amont de ladite figure d'interférence,
- un système électronique (11-18) destiné à moduler la phase de l'une des composantes de polarisation appliquée au milieu optique biréfringent (2), ledit système électronique permettant en outre l'analyse de la phase instantanée relative entre le signal de modulation R appliqué audit milieu biréfringent (2) et le signal S mesuré aux bornes dudit photodétecteur (9), ce qui permet de quantifier la différence relative des indices de réfraction de la cuve de référence Cr et de la cuve de mesure Cm, et
- un système informatique destiné à traiter les données issues du système électronique.

5. Réfractomètre selon la revendication 4, caractérisé en ce que ledit premier milieu optique biréfringent (2) est une cellule de Pockels.

6. Réfractomètre différentiel selon l'une quelconque des revendications 4 ou 5, caractérisé en ce que l'ensemble optique combinant chacun des faisceaux I et II issus desdites cuves comprend une lentille (6) destinée à créer en son foyer (7) ladite figure d'interférence.

7. Réfractomètre différentiel selon l'une quelconque des revendications 4 à 6, caractérisé en ce que le deuxième milieu optique biréfringent (5) est placé sur l'un des faisceaux (F2, F3) issus du diviseur (3).

8. Réfractomètre selon l'une quelconque des revendications 4 à 7, caractérisé en ce que ledit photodétecteur (9) est notamment constitué d'une fibre optique (8) dont une extrêmité est placée au foyer (7) de ladite lentille convergente (6), la surface d'extrêmité de la fibre (8) qui reçoit l'intensité lumineuse étant perpendiculaire à l'axe optique X du réfractomètre, l'autre extrêmité de la fibre optique étant reliée audit photodétecteur (9).

9. Réfractomètre différentiel selon l'une quelconque des revendications 4 ou 5, caractérisé en ce que l'ensemble optique combinant chacun des faisceaux I et II comprend le deuxième milieu optique biréfringent (5') polariseur et une lame (7') destinée à dévier le faisceau.

10. Réfractomètre différentiel selon la revendication 9, caractérisé en ce que l'ensemble optique combinant chacun des faisceaux I et II comprend en outre un élément réfléchissant (6') destiné à renvoyer chacun des deux faisceaux I et II à travers l'une desdites cuves (Cr, Cm) puis vers le premier élément optique (4), le diviseur optique (3), ladite lame (7') et le deuxième milieu optique biréfringent (5').

11. Réfractomètre selon l'une quelconque des revendications 4 à 10, caractérisé en ce que ladite source de lumière 1 est monochromatique, de type LASER.

12. Utilisation du réfractomètre selon l'une quelconque des revendications 4 à 11, en chromatographie liquide à hautes performances.

13. Utilisation du réfractomètre selon l'une des revendications 4 à 11 en chromatographie par perméation sur gel.

14. Utilisation du réfractomètre selon l'une des revendications 4 à 11 pour des mesures de variation de l'indice de réfraction d'une solution en fonction de la concentration en soluté, afin de calibrer un dispositif de diffusion statique de la lumière.

## Patentansprüche

1. Verfahren zur Messung der Differenz, ausgehend von einer Quelle (1) kohärenten ein Bündel F aussendenden Lichtes, zwischen den Brechungsindices zweier Medien (Cr, Cm), die je von einem Lichtbündel (I, II) durchsetzt sind, wobei diese Bündel (I, II) in der Lage sind, eine Interferenzfigur zu erzeugen, deren Verschiebung gemessen wird, dadurch gekennzeichnet, daß man eine der Polarisationskomponenten des Bündels F modifiziert, daß, bevor dieses Bündel F geteilt wird, man eine Phasenmodulation an wenigstens einer dieser Polarisationskomponenten des Bündels F durchführt, um ein Gleiten der Interferenzstreifen der Interferenzfigur zu erhalten, was es ermöglicht, die relative Differenz der Brechungsindices der beiden Medien (Cr, Cm) zu quantifizieren und daß man ein einziges Mittel (9) verwendet, um die Verschiebung der Interferenzstreifen der Interferenzfigur (2) zu erfassen.

2. Verfahren nach Anspruch 1, dadurch gekennzeichnet, daß man eine Pockelszelle zur Modulierung dieser Phase verwendet.

3. Verfahren nach einem der Ansprüche 1 oder 2, dadurch gekennzeichnet, daß dieses Mittel (9) dazu bestimmt ist, die Amplitude und die Richtung der Verschiebung der Interferenzstreifen der Interferenzfigur zu erfassen.

4. Differentialrefraktometer, insbesondere in der Hochleistungsflüssigchromatographie verwendbar, umfassend:
eine ein Bündel F aussendende Quelle (1) kohärenten Lichtes,
einen optischen Teiler (3), der dazu bestimmt ist, die Polarisation dieses aus dieser Quelle stammenden Bündels F zu teilen,
ein erstes optisches Element (4), das dazu bestimmt ist, die beiden kohärenten Bündel (F2, F3), die aus dem optischen Teiler (3) stammen, parallel zu machen,
zwei Behälter oder Schalen Cr, Cm von denen der eine Cr dazu bestimmt ist, eine Bezugsflüssigkeit, der andere Cm eine zu messende Flüssigkeit zu enthalten, wobei jeder von einem der Lichtbündel, die aus dem ersten optischen System (4) stammen, durchsetzt ist,
eine optische Anordnung, die jedes der beiden aus diesen Behältern stammenden Bündel I und II kombiniert und die Erzeugung einer Interferenzfigur ermöglicht und
einen einzigen Photodetektor (9), der dieser Interferenzfigur zugeordnet ist,
dadurch gekennzeichnet, daß es im übrigen ein erstes optisches doppelbrechendes Medium (2) umfaßt, das auf dem Bündel F der Quelle (1) vor dem optischen Teiler (3) angeordnet und dazu bestimmt ist, eine der Polarisationskomponenten dieses Bündels F zu modifizieren,
ein zweites doppelbrechendes optisches Medium (5; 5'), das vor dieser Interferenzfigur angeordnet ist,
ein elektronisches System (11-18), das dazu bestimmt ist, die Phase einer der an das optische doppelbrechende Medium (2) gelegten Polarisationskomponenten zu modulieren, wobei dieses elektronische System im übrigen die Analyse der augenblicklichen relativen Phase zwischen dem Modulationssignal R, das an dieses doppelbrechende Medium (2) gelegt ist und dem Signal S, das an den Klemmen dieses Photodetektors (9) gemessen ist, ermöglicht, wodurch die Differenz bzgl. der Brechungsindices des Bezugsbehälters Cr und des Meßbehälters Cm zu quantifizieren kann, und
ein Informatiksystem, das dazu bestimmt ist, die aus dem elektronischen System stammenden Daten zu verarbeiten.

5. Refraktometer nach Anspruch 4, dadurch gekennzeichnet, daß dieses erste doppelbrechende optische Medium (2) eine Pokkelszelle ist.

6. Differentialrefraktometer nach einem der Ansprüche 4 oder 5, dadurch gekennzeichnet, daß die optische Anordnung, die jedes der aus diesen Behältern stammenden Bündel I und II kombiniert, eine Linse (6) umfaßt, die dazu bestimmt ist, in ihrem Brennpunkt (7) diese Interferenzfigur zu erzeugen.

7. Differentialrefraktometer nach einem der Ansprüche 4 bis 6, dadurch gekennzeichnet, daß das zweite optische doppelbrechende Medium (5) auf einem der Bündel (F2, F3), die aus dem Teiler (3) stammen, angeordnet ist.

8. Refraktometer nach einem der Ansprüche 4 bis 7, dadurch gekennzeichnet, daß dieser Photodetektor (9) insbesondere aus einer optischen Faser (8) gebildet ist, von der ein Ende im Brennpunkt (7) dieser konvergenten Linse (6) angeordnet ist, wobei die Endfläche der Faser (8), die die Lichtintensität empfängt, senkrecht zur optischen Achse X des Refraktometers ist, wobei das andere Ende der optischen Faser mit diesem Photodetektor (9) verbunden ist.

9. Differentialrefraktometer nach einem der Ansprüche 4 oder 5, dadurch gekennzeichnet, daß die optische Anordnung, die jedes der Bündel I und II kombiniert, das zweite optische doppelbrechende polarisierende Medium (5') sowie eine Lamelle (7') umfaßt, die dazu bestimmt ist, dieses Bündel abzulenken.

10. Differentialrefraktometer nach Anspruch 9, dadurch gekennzeichnet, daß die optische Anordnung, die jedes der Bündel I und II kombiniert, im übrigen ein reflektierendes Element (6') umfaßt, das dazu bestimmt ist, jedes der Bündel I und II durch eines der Behälter (Cr, Cm) zurückzuschicken und dann gegen das erste optische Element (4), den optischen Teiler (3), diese Lamelle (7') und das zweite doppelbrechende optische Medium (5') zu richten.

11. Refraktometer nach einem der Ansprüche 4 bis 10, dadurch gekennzeichnet, daß diese Lichtquelle 1 monochromatisch, vom Lasertyp ist.

12. Verwendung des Refraktometers nach einem der Ansprüche 4 bis 11 in der Hochleistungsflüssigchromatographie.

13. Verwendung des Refraktometers nach einem der Ansprüche 4 bis 11 in der Gelpermeations-Chromatographie.

14. Verwendung des Refraktometers nach einem der Ansprüche 4 bis 11 für Messungen für die Variation des Brechungsindices einer Lösung als Funktion der Löslichkeitskonzentration, um eine statische Lichtdiffusionsvorrichtung zu kalibrieren.

## Claims

1. A method of measuring, using a coherent light source (1) emitting a beam F, the difference between the refractive indices of two media (Cr, Cm), through each of which a light beam (I, II) is passed, said beams (I, II) being likely to give rise to an interference figure whose shift is measured, characterised in that one of the polarisation components of the beam F is modified, a phase modulation is applied to at least one of said polarisation components of the beam F before said beam F is split in order to obtain a shift in the fringes of the interference figure, thus allowing the relative difference in the refractive indices of the two media (Cr, Cm) to be quantified, and a single means (9) is used to detect the shift in the fringes of the interference figure (2).

2. A method as claimed in claim 1, characterised in that a Pockels cell is used to modulate said phase.

3. A method as claimed in any one of claims 1 or 2, characterised in that the function of said means (9) is to detect the amplitude and direction of shift in the fringes of the interference figure.

4. A differential refractometer, which can be used in particular in high performance liquid chromatographic comprising:
a coherent light source (1) emitting a beam F,
an optical splitter (3), the purpose of which is to split the polarisation of said beam F emitted from said light source,
a first optical element (4) the purpose of which is to make the two coherent beams (F2, F3) emanating from the optical splitter (3) parallel,
two tanks Cr, Cm, one Cr for containing a reference liquid and the other Cm to contain a liquid to be measured, through each of which one of the beams emitted by the first optical system (4) is passed,
an optical unit combining each of the two beams I and II emanating from said tanks and allowing an interference figure to be created, and
a single photo-detector (9) linked to said interference figure,
characterised in that it also has a first, birefringent optical medium (2) positioned on the beam F from the source (1), upstream of the optical splitter (3), the purpose of which is to modify one of the polarisation components of said beam F,
- a second, birefringent optical medium (5; 5') positioned upstream of said interference figure,
- an electronic system (11-18) the purpose of which is to modulate the phase of one of the polarisation components applied to the birefringent optical medium (2), said electronic system also allowing the relative instantaneous phase between the modulation signal R applied to said birefringent medium (2) and the signal S measured at the terminals of said photo-detector (9) to be analysed so that the relative difference in the refractive indices of the reference tank Cr and the measured tank Cm can be quantified, and
- a computer system for processing the data supplied by the electronic system.

5. A refractometer as claimed in claim 4, characterised in that said first, birefringent optical medium (2) is a Pockels cell.

6. A differential refractometer as claimed in any one of claims 4 or 5, characterised in that the optical unit combining each of the beams I and II emitted from said tanks has a lens (6) the purpose of which is to crease said interference fringe in its focus.

7. A differential refractometer as claimed in any one of claims 4 to 6, characterised in that the second, birefringent optical medium (5) is positioned on one of the beams (F2, F3) emanating from the splitter (3).

8. A refractometer as claimed in any one of claims 4 to 7, characterised in that said photo-detector (9) is an optical fibre (8) in particular, one end of which is positioned at the focal point (7) of said convergent lens (6), the end surface of the fibre (8) which receives the light intensity being perpendicular to the optical axis X of the refractometer whilst the other end of the optical fibre is linked to the photodetector (9).

9. A differential refractometer as claimed in any one of claims 4 or 5, characterised in that the optical unit combining each of the beams I and II has the second, polarising, birefringent optical medium (5') and a plate (7') for deflecting the beam.

10. A differential refractometer as claimed in claim 9, characterised in that the optical unit combining each of the beams I and II also has a reflective element (6'), the purpose of which is to send each of the two beams I and II back through one of said tanks (Cr, Cm) and then on to the first optical element (4), the optical splitter (3), said plate (7') and the second birefringent optical medium (5').

11. A refractometer as claimed in any one of claims 4 to 10, characterised in that said light source 1 is monochromatic and of the LASER type.

12. Use of the refractometer claimed in any one of claims 4 to 11 for high performance liquid chromatography.

13. Use of the refractometer claimed in one of claims 4 to 11 for chromatography by permeation on gel.

14. Use of the refractometer claimed in one of claims 4 to 11 for measuring the variation in the refractive index of a solution as a function of the solute concentration in order to calibrate a static light diffusion device.
